# EUROPÄISCHE PATENTSCHRIFT

(11) **EP 0 371 330 B1**
(45) Veröffentlichungstag und Bekanntmachung des Hinweises auf die Patenterteilung: **02.03.1994**
(21) Anmeldenummer: 89121177.3
(22) Anmeldetag: 16.11.1989
(51) Int. Cl.: C08G 18/50, C08G 18/66

(54) **Verfahren zur Herstellung von Formkörpern und die nach diesem Verfahren erhältlichen Formkörper**
Process for the preparation of moulded parts, and moulded parts obtained in this way
Procédé de préparation de pièces moulées et pièces moulées ainsi obtenues

(30) Priorität: 29.11.1988 DE 3840167
(43) Veröffentlichungstag der Anmeldung: 06.06.1990
(73) Patentinhaber: BAYER AG, 51368 Leverkusen (DE)
(72) Erfinder: Wagner, Joachim, Dr., D-5000 Köln 80 (DE); Rasshofer, Werner, Dr., D-5000 Köln 80 (DE); Jürgens, Eberhard, Dr., D-5000 Köln 60 (DE); Eisele, Ulrich, Dr., D-5090 Leverkusen 1 (DE)

(56) Entgegenhaltungen:
- EP-A- 0 012 414
- DE-A- 3 132 760
- FR-A- 2 090 331
- US-A- 3 354 251

## Beschreibung

Die Erfindung betrifft ein verbessertes Verfahren zur Herstellung von ein- oder mehrschichtigen Formkörpern aus bestimmten Polyisocyanat-Polyadditionsprodukten durch thermoplastische Formgebung und die so erhaltenen Formkörper.

Gemäß einem eigenen älteren Vorschlag (deutsche Patentanmeldung P 37 33 756.4) werden Formkörper durch thermoplastische Formgebung von Granulaten, Schnipseln und/oder anderen Klein- und Kleinstteilen, wie sie bei der Herstellung und Verarbeitung von Polyisocyanat-Polyadditionsprodukten anfallen hergestellt. Gemäß einem weiteren eigenen älteren Vorschlag (deutsche Patentanmeldung P 38 09 524.6) werden Aufbauten und Laminate unter Verwendung von solchen Kleinteilen hergestellt, wobei diese als solche oder in Form von - in einem separaten Schritt hergestelltem - Halbzeug verwendet werden.

Es hat sich aber gezeigt, daß es zu Desintegrationserscheinungen kommen kann, wenn in ein- und demselben Aufbau Materialien mit stark unterschiedlichen Eigenschaften, beispielsweise stark unterschiedlicher Oberflächenspannung miteinander verpreßt werden sollen, beispielsweise solche mit stark unterschiedlicher Härte, oder solche die innere Trennmittel aufweisen bzw. die nicht selbsttrennend eingestellt sind oder wenn beispielsweise lackierte und unlackierte Materialien miteinander zu einem Verbund vereinigt werden sollen.

Es war daher die der Erfindung zugrundeliegende Aufgabe, ein verbessertes Verfahren zur Verfügung zu stellen, bei welchem alle Arten von verkleinerten Polyisocyanat-Polyadditionsprodukten der nachstehend genannten Art ungeachtet ihrer chemischen Zusammensetzung und ihrer physikalischen Eigenschaften zu Verbundwerkstoffen vereinigt werden können.

Überraschenderweise wurde gefunden, daß diese Aufgabe durch Mitverwendung von bestimmten, nachstehend naher beschriebenen Verarbeitungshilfsmitteln gelöst werden kann.

Gegenstand der Erfindung ist ein Verfahren zur Herstellung von ein- oder mehrschichtigen Formkörpern aus Klein- und Kleinstteilen aus Polyisocyanat-Polyadditionsprodukten durch thermoplastische Formgebung und Einwirkung von Druck, dadurch gekennzeichnet, daß man
(i) als Polyisocyanat-Polyadditionsprodukte solche verwendet, die durch Umsetzung von
   a) (cyclo)aliphatischen oder aromatischen Polyisocyanaten,
   b) Verbindungen mit einem Molekulargewicht zwischen 1800 und 12 000, welche im statistischen Mittel mindestens 2,5 gegenüber Isocyanatgruppen reaktionsfähige Gruppen aufweisen,
   gegebenenfalls
   c) Diaminen mit zwei primären und/oder sekundären aromatisch gebundenen Aminogruppen des Molekulargewichtsbereichs 108 bis 400,
   sowie gegebenenfalls
   d) Ethergruppen aufweisenden (Cyclo)alkanpolyolen und/oder (Cyclo)alkanpolyaminen des Molekulargewichtsbereichs 60 bis 1799
   sowie gegebenenfalls unter Mitverwendung von
   e) den aus der Polyurethanchemie an sich bekannten Hilfs- und Zusatzmitteln
   unter Einbehaltung einer Isocyanatkennzahl von 60 bis 140 im Ein- oder Mehrstufenverfahren hergestellt worden sind, mit der Maßgabe, daß mindestens eine der Komponenten c) und/oder d) ein von 60 bis 400 liegendes Molekulargewicht aufweist und in einer solchen Menge mitverwendet wird, daß die Gesamtmenge an Komponenten c) und d) dieses Molekulargewichtsbereichs mindestens 5 Gew.-%, bezogen auf das Gewicht der Komponente b), beträgt,
   und

(ii) die thermoplastische Formgebung unter Mitverwendung von Verarbeitungshilfsmitteln, ausgewählt aus der Gruppe bestehend aus die Oberfläche der Polyisocyanat-Polyadditionsprodukte anquellenden Lösungsmitteln, mit den Polyisocyanat-Polyadditionsprodukten im Sinne einer Additions- oder Kondensationsreaktion reaktionsfähigen Verbindungen, Radikalbildnern und unter den Verfahrensbedingungen thermoplastisch verarbeitbaren, von den Polyisocyanat-Polyadditionsprodukten verschiedenen Materialien durchführt.

Gegenstand der Erfindung sind auch die nach diesem Verfahren hergestellten Formkörper.

Das erfindungsgemäße Verfahren gestattet nicht nur die Vereinigung von unterschiedlichsten Polyurethan- oder Poly(urethan)harnstoffmaterialien ohne Vorsortierung sondern ermöglicht oftmals auch eine thermoplastische Formgebung unter wesentlich milderen Arbeitsbedingungen.

Bei den beim erfindungsgemäßen Verfahren einzusetzenden Klein- und Kleinstteilen handelt es sich beispielsweise um Granulate, Schnipsel, Sägespäne und/oder andere Klein- und Kleinstteile aus Polyisocyanat-Polyadditionsprodukten auf Basis der vorstehend genannten Ausgangsmaterialien.

Für die Herstellung der Polyisocyanat-Polyadditionsprodukte geeignete aromatische Polyisocyanate sind insbesondere die in EP-B 0 081 701, Kolonne 3, Zeile 30 bis Kolonne 4, Zeile 25 genannten Verbindungen, wobei die dort als bevorzugt herausgestellten Polyisocyanate auch im Rahmen der vorliegenden Erfindung bevorzugt sind.

Geeignete (cyclo)aliphatische Polyisocyanate a) sind beliebige organische Diisocyanate eines über 137, vorzugsweise bei 168 bis 290 liegenden Molekulargewichts mit ausschließlich (cyclo)aliphatisch gebundenen Isocyanatgruppen wie beispielsweise 1,6-Diisocyanatohexan, 1,12-Diisocyanatododecan, 1,3-Diisocyanatocyclobutan, 1,3-und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4′-Diisocyanatodicyclohexylmethan oder beliebige Gemische derartiger einfacher (cyclo)aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen. Gemische von unmodifizierten Diisocyanaten mit den genannten modifizierten Polyisocyanaten können ebenfalls als Komponente a) verwendet werden.

Bei der Komponente b) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b) im Sinne der Isocyanat-Additionsreaktion eine über 2,5, vorzugsweise bei 2,6 bis 3,0 und besonders bevorzugt bei 2,8 bis 3,0, liegende (mittlere) Funktionalität aufweist. Besonders gut als Komponente b) geeignete Verbindungen sind, diesen Ausführungen entsprechende, Polyetherpolyole bzw. Gemische van Polyetherpolyolen wie sie in DE-AS 2 622 951, Kolonne 6, Zeile 65 - Kolonne 7, Zeile 47, offenbart sind, wobei auch erfindungsgemäß solche Polyetherpolyale bevorzugt sind, deren Hydroxylgruppen zumindest zu 50 %, vorzugsweise zumindest zu 80 %, aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den oben gemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h., Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40, genannten Verbindungen.

Ebenfalls als Ausgangskomponente b) geeignet, jedoch weniger bevorzugt, sind Aminogruppen aufweisende Polyester des obengenannten Molekulargewichtsbereichs.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatische Diamine der in EP-B-00 81 701, Kolonne 5, Zeile 58 bis Kolonne 6, Zeile 34, beispielhaft genannten Art, wobei auch erfindungsgemäß die dort als bevorzugt herausgestellten Diamine bevorzugt sind. Besonders bevorzugte aromatische Diamine sind die isomeren Diethyltoluylendiamine, insbesondere eine Mischung aus 65 Gew.-% 1-Methyl-3,5-diethyl-2,4-diaminobenzol und 35 Gew.-% 1-Methyl-3,5-diethyl-2,6-diaminobenzol ("DETDA").

Bei den gegebenenfalls als weitere Aufbaukomponenten d) mitzuverwendenden Polyolen oder Polyaminen handelt es sich um beliebige nicht-aromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50, offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxycyclohexan oder 1,4-Bis-hydroxymethyl-cyclohexan und Polyamine wie beispielsweise 1,4-Cyclohexan-diamin, Isophorondiamin, Bis-(4-aminocyclohexyl)-methan, Bis-(3-methyl-4-aminocyclohexyl)-methan.

Es ist bevorzugt, daß bei der Herstellung der Elastomeren mindestens eine der Komponenten c) oder d) zur Anwendung gelangt und zwar in solchen Mengen, daß der Gewichtsanteil der Komponenten c) und/oder d), bezogen auf das Gewicht der Komponente b), mindestens 5 Gew.-%, vorzugsweise mindestens 10 Gew.-%, beträgt. Besonders bevorzugt werden dabei Art und Mengenverhältnisse der Komponenten b), c) und/oder d) so bemessen, daß in den Elastomeren das Molverhältnis von Harnstoffgruppen zu Urethangruppen bei mindestens 2:1 liegt. Besonders bevorzugt liegt dieses Verhältnis bei mindestens 5:1.

Bei den bei der Herstellung der Polyisocyanat-Polyadditionsprodukte gegebenenfalls mitzuverwendenden Hilfs-und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, Pigmente, Farbstoffe, UV-Stabilisatoren, Weichmacher oder fungistatisch bzw. bakteriostatisch wirkende Substanzen, wie sie beispielsweise in EP-B-00 81 701, Kolonne 6, Zeile 40 bis Kolonne 9, Zeile 31, beispielhaft beschrieben sind.

Zu den bevorzugten, gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Polyisocyanat-Polyadditionsprodukte mitverwendet werden können.

Die Herstellung der Polyisocyanat-Polyadditionsprodukte erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem man die Polyisocyanat-Komponente a) mit einem Teil der Komponente b) und gegebenenfalls der Komponente d) unter Bildung von NCO-Semiprepolymeren umsetzt, welche anschließend einstufig mit dem Gemisch der restlichen Komponenten zur Reaktion gebracht werden. Auch die Herstellung der Elastomeren nach dem klassischen Prepolymerverfahren ist prinzipiell denkbar. In allen Fällen liegt die NCO-Kennzahl (Anzahl der NCO-Gruppen dividiert durch die Anzahl an NCO-reaktiven Gruppen, multipliziert mit 100) bei 60 bis 140, vorzugsweise bei 80 bis 120, insbesondere 95 bis 115.

Besonders bevorzugt handelt es sich bei den beim erfindungsgemäßen Verfahren einzusetzenden Ausgangsmaterialien um Klein- oder Kleinstteile wie sie bei der Herstellung und Verwendung von Formkörpern auf Basis von Polyisocyanat-Polyadditionsprodukten aus den genannten Ausgangsmaterialien als Nebenprodukte bzw. Abfall anfallen und bislang verbrannt wurden.

Als erfindungsgemäß einzusetzende Verarbeitungshilfsmittel kommen solche vom "Lösungsmittel-Typ", vom "Reaktiv-Typ", Radikalbildner und solche vom "Thermoplast-Typ" in Betracht.

Bei den Verarbeitungshilfsmitteln vom "Lösungsmittel-Typ" handelt es sich um solche, die die Oberfläche der Polyisocyanat-Polyadditionsprodukte anquellen und damit weicher und plastischer machen. Beispiele sind Alkohole wie Methanol, Ethanol, n-, i-Propanol und höhere Alkohole, Diole wie Ethylenglykol, Glykol-monoether und -monoester, Ether-Lösungsmittel wie Dioxan, Tetrahydrofuran oder Dimethoxyethan, halogenierte Kohlenwasserstoffe, Ketone, niedere aliphatische Aldehyde, gegebenenfalls in acetalisierter oder ketalisierter Form, Ester wie Essigester, ferner aprotisch polare Lösungsmittel wie Acetonitril, Dimethyl-acetamid, -formamid, Dimethylsulfoxid, Dimethylsulfolen oder Tetramethylharnstoff.

Bei den Verarbeitungshilfsmitteln vom "Reaktiv-Typ" handelt es sich beispielsweise um solche, die mit den Polyisocyanat-Polyadditionsprodukten durch Ausbildung chemischer Bindungen, insbesondere im Sinne einer Additionsreaktion mit dem in den Polyisocyanat-Polyadditionsprodukten vorliegenden aktiven Wasserstoffatomen reagieren.

Geeignet sind beispielsweise organische Polyisocyanate der oben unter a) als Ausgangsmaterialien beispielhaft genannten Art, Isocyanatgruppen aufweisende Prepolymere aus solchen Polyisocyanaten und Verbindungen mit gegenüber Isocyanatgruppen reaktionsfähigen Gruppen der oben beispielhaft als Komponente b) genannten Art oder Epoxidgruppen aufweisende Verbindungen der aus der Epoxidharzchemie an sich bekannten Art, beispielsweise die bekannten Umsetzungsprodukte von Bisphenol A mit Epichlorhydrin.

Grundsätzlich geeignet als Verarbeitungshilfsmittel vom "Reaktiv-Typ" sind auch beispielsweise Phenol-, Melamin-oder andere Formaldehyd-Harze, soweit sie mit den Polyisocyanat-Polyadditionsprodukten im Sinne einer Kondensationsreaktion reaktionsfähig sind.

Weiterhin geeignet sind Radikalbildner als Verarbeitungshilfsmittel. Hierzu gehören insbesondere peroxidische Verarbeitungshilfsmittel, wie sie aus der Gummiverarbeitung als Radikalstarter bekannt sind. Besonders bevorzugt geeignet sind solche peroxidischen Verarbeitungshilfsmittel, die bei den besonders bevorzugten Preßtemperaturen eine gegenüber der Preßdauer kurze Halbwertzeit besitzen. Geeignet sind beispielsweise Lauroylperoxid, Dilauroylperoxid, Cumolhydroperoxid, tert.-Butylperoxid, Di-tert.-butylperoxid, tert.-Butylperbenzoat, tert.-Butylhydroperoxid, Benzoylperoxid, Dibenzoylperoxid, Ethylmethylketon-peroxid, Dicumylperoxid (z.B.®Perkadox SB der Fa. Akzo) oder andere Radikalbildner beispielsweise 2,2′-Azo-bis-(2-methylpropionitril).

Die Verarbeitungshilfsmittel vom "Reaktiv-Typ" und auch die Radikalbildner werden in flüssiger oder fester Form eingesetzt, wobei bei Verwendung von festen Hilfsmitteln vorauszusetzen ist, daß sie während der thermoplastischen Formgebung fließfähig werden.

Feste Verarbeitungshilfsmittel können auch über eine geeignete Lösung eingebracht werden. Das Lösungsmittel sollte bevorzugt das zur Anwendung kommende Granulat benetzen und vor der Verarbeitung, spätestens jedoch während der Verarbeitung entweichen können.

Als Verarbeitungshilfsmittel vom "Thermoplast-Typ" kommen insbesondere thermoplastische Harze in Betracht, die unter den Bedingungen des erfindungsgemäßen Verfahrens selbst thermoplastisch verarbeitbar sind, so daß die Polyisocyanat-Polyadditionsprodukte bei der Durchführung des erfindungsgemäßen Verfahrens in diese Hilfsmittel eingebettet werden. Geeignete derartige Hilfsmittel sind beispielsweise Polyolefine, aromatische Polyetherester, Polycarbonate oder andere, thermoplastisch verarbeitbare Materialien, die von den eingesetzten kleinteiligen Polyisocyanat-Polyadditionsprodukten verschieden sind.

Die thermoplastische Formgebung erfolgt im allgemeinen bei einem Druck von mindestens 5 bar, vorzugsweise innerhalb des Druckbereichs von 50 bis 400 bar bei einer Temperatur von mindestens 50°C, vorzugsweise 100 bis 200°C, wobei die Verformungszeiten bei 1 Sekunde bis 10 Minuten liegen können.

Die thermoplastische Verarbeitung erfolgt in den hierfür an sich bekannten Werkzeugen wie beispielsweise Tiefziehpressen, Walzenanlagen, Kalandern, Pressen, modifizierten Extrudern und modifizierten Spritzgießmaschinen. Die Modifikationen müssen hierbei so geartet sein, daß die Granulatkörper im wesentlichen unaufgeschmolzen in eine vorgegebene Form unter dem Fülldruck eingedrückt werden können. Beispiele für eine solche Modifikation sind eine große Austrittsdüse, große Transportkanäle im Extruder oder in der Spritzgußmaschine und in den Formzuleitungskanälen. Scherkräfte, die kurz vor oder während der Formfüllung auftreten, begünstigen den Zusammenhalt des hergestellten Formkörpers.

Die erfindungswesentlichen Verarbeitungshilfsmittel werden den der thermoplastischen Formgebung zuzuführenden Polyisocyanat-Polyadditionsprodukten vorzugsweise vor der Verpressung beigegeben, wobei eine innige Durchmischung der Klein- und Kleinstteile der Polyisocyanat-Polyadditionsprodukte mit den Verarbeitungsmitteln erfolgt. Es ist auch möglich, bei der Durchführung des erfindungsgemäßen Verfahrens Kombinationen verschiedener Verarbeitungshilfsmittel der beispielhaft genannten Art einzusetzen, wobei in einem solchen Falle die Hilfsmittel dem Kleinmaterial aus Polyisocyanat-Polyadditionsprodukt als Gemisch oder einzeln nacheinander zugegeben werden können. Im allgemeinen werden die Hilfsmittel in einer Menge von 0,01 bis 50, vorzugsweise von 1 bis 10 Gew.-%, bezogen auf das Gewicht der Polyisocyanat-Polyadditionsprodukte, verwendet.

Bei der Durchführung des erfindungsgemäßen Verfahrens können dem der thermoplastischen Formgebung zuzuführenden Gemisch aus (i) Klein- und Kleinstteilen aus Polyisocyanat-Polyadditionsprodukten der genannten Art und (ii) erfindungswesentlichen Verarbeitungshilfsmitteln auch (iii) weitere Hilfsmittel zugemischt werden, um die Eigenschaften der resultierenden Verbundkörper zu verbessern. Hierzu gehören beispielsweise Antistatika, Flammschutzmittel, Mittel zur Erhöhung der elektrischen Leitfähigkeit, Verstärkungsstoffe wie Glas- oder Kohlefasern oder Füllstoffe wie Bariumsulfat oder Glimmer.

Die nach dem erfindungsgemäßen Verfahren hergestellten Teile können Fertigteilcharakter haben oder auch als Halbzeug ausgebildet sein, um beispielsweise in einem weiteren Arbeitsgang einzeln oder im Verbund mit beliebigen weiteren Materialien zu Fertigartikeln verarbeitet zu werden.

Das erfindungsgemäße Verfahren gestattet die Herstellung von besonders hochwertigen Verbundkörpern, insbesondere Folienverbunden, die den unterschiedlichsten Verwendungszwecken zugeführt werden können. So eignen sich die erfindungsgemäßen Verbundkörper beispielsweise in Form von Hohlkörpern für Einsätze, Becher, Behälter verschiedener Abmessungen und Inhalte, als Abdeckungen für Armaturentafeln, Schaltkonsolen, für flächenförmige Fahrzeug-Karosserieelemente wie Türblätter, Seitenteile, Kotflügel oder Motorraum- und Kofferraumhauben, sowie Radkappen. In flächer Form eignen sich die Verbundkörper auch für Schreibunterlagen, Anzeigetafeln mit Magnethalterungen, Klebeschildern, Schutzfolien und Beschichtungen für die verschiedensten Zwecke. Erfindungsgemäße Verfahrensprodukte können auch in Form von kleinen, bisher nach dem RIM-Verfahren nicht wirtschaftlich herstellbaren, Formteilen wie Tastaturelementen, hartelastischen Dichtungsteilen und Manschetten, Griffmulden und Griffkörpern, kleinen Dämpfungselementen, Unterleg-und Distanzscheiben Verwendung finden. Die erfindungsgemäßen Verfahrensprodukte können auch zur Herstellung von versteiften oder unversteiften Profilen für Kabelkanäle und Dichtungslippen oder zur Herstellung von beliebigen anderen, massiven kleinen Körpern verwendet werden.

### Beispiele

### Herstellung eines Polyisocyanat-Polyadditionsprodukts (Formteil auf Polyharnstoff-Basis)

Zur Herstellung des Formteils wurde die nachstehend genannte Rezeptur wie folgt verarbeitet:
Maschine: Laborkolbendosiergerät;
Form: Plattenform aus Stahl der inneren Abmessung 300 x 200 x 4 mm;
Mischkopf: MQ 8 der Firma Hennecke, Sankt Augustin;
Arbeitsdruck: 180 bar;
Einfüllzeit: 1 Sekunde;
Rohstoff-Temperaturen: 65°C (A-Komponente) bzw. 50°C (B-Komponente);
Formtemperatur: 70°C;
Formstandzeit: 30 Sekunden;
äußeres Formtrennmittel: RCTW 2006 der Firma Chemtrend.

### A-Komponente:

58,6 Gew-Teile eines aromatischen Aminopolyethers der NH-Zahl 44, hergestellt durch Hydrolyse eines NCO-Prepolymeren bei 90°C unter Verwendung eines Gemischs aus 3,5 Gew.-Teilen Dimethylformamid, 0,1 Gew.-Teilen Natriumhydroxid und 100 Gew.-Teilen Wasser pro 1000 Gew.-Teilen des Prepolymeren und anschließender destillativer Entfernung der flüchtigen Bestandteile. Das NCO-Prepolymer wies einen NCO-Gehalt von 3,4 % auf und wurde durch Umsetzung von 2,4-Diisocyanatotoluol mit einer unterschüssigen Menge eines Polyethergemischs erhalten.

Das Polyethergemisch bestand zu gleichen Gewichtsteilen aus (i) dem Propoxylierungsprodukt der OH-Zahl 56 und der OH-Funktionalität 2,4 eines Gemischs aus Wasser und Trimethylolpropan und (ii) einem Polyetherpolyol der OH-Zahl 35, hergestellt durch Propoxylierung von Glycerin und anschließender Ethoxylierung des Propoxylierungsprodukts (Gewichtsverhältnis PO:EO = 87:13);
28,8 Gew.-Teile DETDA;
0,9 Gew.-Teilen eines handelsüblichen Stabilisators auf Basis eines Polyetherpolysiloxans (L 5430 der Firma Union Carbide);
5,6 Gew.-Teile eines Gemischs aus gleichen Gewichtsteilen (i) Zinkstearat und (ii) dem Anlagerungsprodukt von 5 Mol Propylenoxid an 1 Mol Ethylendiamin (inneres Formtrennmittel);
6,1 Gew.-Teile einer hochmolekularen Polyrizinolsäure mit einer Säurezahl von unter 5 (inneres Formtrennmittel).

### B-Komponente:

®Desmodur M 53 (Polyester-modifiziertes 4,4′-Diisocyanatodiphenylmethan mit einem NCO-Gehalt von 19 Gew.-%, Handelsprodukt der Bayer AG).

Die genannten Komponenten wurden entsprechend den oben gemachten Angaben bezüglich der Verarbeitungsbedingungen unter Einhaltung einer NCO-Kennzahl von 100 zu Elastomer-Platten der Dichte 1,15 g/cm³ verarbeitet.

### Herstellung eines Granulats:

Unter Verwendung einer Schneidmühle wurde aus den genannten Platten ein Granulat der mittleren Teilchengröße 2 bis 3 mm hergestellt.

### Erfindungsgemäßes Verfahren:

In den nachfolgenden Beispielen 1 bis 4 wurden die Granulatkörner bei 180°C unter einem Druck von 350 bar während eines Zeitraums von 2 Minuten in einer geschlossenen Plattenform mittels einer Laborpresse Modell 200 T der Fa. Schwabenthan zu Platten der Dicke 4 mm verpreßt. Aus den Platten wurden jeweils Stäbe geschnitten und im Zugversuch die Reißdehnung und Reißfestigkeit bestimmt.

### Beispiel 1

### Unbehandeltes Granulat

### Beispiel 2

Abmischung der genannten Granulatkörner mit 10 Gew.-%, bezogen auf Polyisocyanat-Polyadditionsprodukt, eines Granulats der Teilchengröße 2 bis 3 mm aus einem handelsüblichen thermoplastischen Polyurethan (®Desmopan 359 der Bayer AG). Bei dem thermoplastischen Polyurethan handelt es sich um ein solches einer Shore D-Härte gemäß DIN 53 505 von 59, eines Elastizitätsmoduls gemäß DIN 53 455 von 160 mPa, einer Bruchspannung gemäß DIN 53 504 von 50 mPa, einer Bruchdehnung gemäß DIN 53 504 von 350 % und einer Dichte von 1,23 g/cm³.

### Beispiel 3

Die Granulatkörner wurden mit 10 Gew.-%, bezogen auf Gemisch, eines ABS-Granulats der Teilchengröße 2 bis 3 mm abgemischt. Bei dem ABS-Granulat handelt es sich um ein solches auf Basis eines Acrylnitril-Butadien-Styrol-Copolymerisats einer Wicat-Erweichungstemperatur gemäß DIN 53 460 von 92°C und einer Kerbschlagzähigkeit gemäß DIN 53 453 von 12 kJ/m².

### Beispiel 4

Die Granulatkörner wurden mit einer gesättigten Lösung eines Polyisocyanats in Toluol vollständig benetzt, an der Luft getrocknet und anschließend über Nacht mit einer gesättigten Lösung von Dicumylperoxid in Heptan behandelt. Bei dem Polyisocyanat handelt es sich um ein Polyisocyanatgemisch der Diphenylmethanreihe der Viskosität 200 mPa.s/23°C. Anschließend wurde das Restlösungsmittel durch Trocknen im Trockenschrank (80°C, 1 h) entfernt.

### Beispiel 5

Bei diesem Beispiel handelt es sich um eine Referenzprobe aus unzerstörtem Prüfkörper (nicht verschnittene, ursprüngliche Platte aus Polyisocyanat-Polyadditionsprodukt der obengenannten Art).

| Beispiel | Reißfestigkeit (MPa) | Reißdehnung (%) |
|---|---|---|
| 1 | 4 | 3 |
| 2 | 6 | 4 |
| 3 | 6 | 4 |
| 4 | 37 | 15 |
| 5 | 37 | 150 |

## Patentansprüche

1. Verfahren zur Herstellung von ein- oder mehrschichtigen Formkörpern unter Verwendung von Klein- und Kleinstteilen aus Polyisocyanat-Polyadditionsprodukten ohne Aufschmelzen derselben durch thermoplastische Formgebung und Einwirkung von Druck, dadurch gekennzeichnet, daß man
(i) als Polyisocyanat-Polyadditionsprodukte solche verwendet, die durch Umsetzung von
a) (cyclo)aliphatischen oder aromatischen Polyisocyanaten,
b) Verbindungen mit einem Molekulargewicht zwischen 1800 und 12 000 (zahlenmittleres Molekulargewicht), welche im statistischen Mittel mindestens 2,5 gegenüber Isocyanatgruppen reaktionsfähige Gruppen aufweisen,
gegebenenfalls
c) Diaminen mit zwei primären und/oder sekundären aromatisch gebundenen Aminogruppen des Molekulargewichtsbereichs 108 bis 400,
sowie gegebenenfalls
d) gegebenenfalls Ethergruppen aufweisenden (Cyclo)alkanpolyolen und/oder (Cyclo)alkanpolyaminen des Molekulargewichtsbereichs 60 bis 1799
sowie gegebenenfalls unter Mitverwendung von
e) den aus der Polyurethanchemie an sich bekannten Hilfs- und Zusatzmitteln
unter Einbehaltung einer Isocyanatkennzahl von 60 bis 140 im Ein- oder Mehrstufenverfahren hergestellt worden sind, mit der Maßgabe, daß mindestens eine der Komponenten c) und/oder d) ein von 60 bis 400 liegendes Molekulargewicht aufweist und in einer solchen Menge mitverwendet wird, daß die Gesamtmenge an Komponenten c) und d) dieses Molekulargewichtsbereichs mindestens 5 Gew.-%, bezogen auf das Gewicht der Komponente b), beträgt,
und
(ii) die thermoplastische Formgebung unter Mitverwendung von Verarbeitungshilfsmitteln, ausgewählt aus der Gruppe bestehend aus die Oberfläche der Polyisocyanat-Polyadditionsprodukte anquellenden Lösungsmitteln, mit den Polyisocyanat-Polyadditionsprodukten im Sinne einer Additions- oder Kondensationsreaktion reaktionsfähigen Verbindungen, Radikalbildnern und unter den Verfahrensbedingungen thermoplastisch verarbeitbaren, von den Polyisocyanat-Polyadditionsprodukten verschiedenen Materialien durchführt.

2. Verfahren gemäß Anspruch 1, dadurch gekennzeichnet, daß man die thermoplastische Formgebung innerhalb des Temperaturbereichs von 50 bis 200°C bei einem Druck von 5 bis 400 bar durchführt.

3. Gemäß Anspruch 1 und 2 erhältliche Formkörper.

## Claims

1. A process for the production of single layered or multilayered moulded articles from small and very small particles of polyisocyanate polyaddition products by thermoplastic shaping under pressure without melting of the particles, characterized in that
(i) the polyisocyanate polyaddition products used have been obtained by the reaction of
(a) (cyclo)aliphatic or aromatic polyisocyanates,
(b) compounds having a molecular weight of from 1800 to 12,000 (number average molecular weight) containing, on statistical average, at least 2.5 isocyanate reactive groups,
optionally
(c) diamines in the molecular weight range of from 108 to 400 containing two primary and/or secondary aromatically bound amino groups and optionally
(d) (cyclo)alkane polyols and/or (cyclo)alkane polyamines in the molecular weight range of from 60 to 1799 optionally containing ether groups,
optionally with the addition of
(e) the auxiliary agents and additives known from polyurethane chemistry
by a single stage or multistage process in which an isocyanate index of from 60 to 140 is maintained, under the condition that at least one of the components c) and/or d) has a molecular weight of from 60 to 400 and is used in such a quantity that the total quantity of components c) and d) within this molecular weight range amounts to at least 5% by weight, based on the weight of component b), and
(ii) the process of thermoplastic shaping is carried out with the addition of processing auxiliaries selected from solvents which swell the surface of the polyisocyanate polyaddition products, compounds which are capable of undergoing an addition or a condensation reaction with the polyisocyanate polyaddition products, radical formers and materials which are capable of being processed thermoplastically under the conditions of the process but are different from the polyisocyanate polyaddition products.

2. A process according to claim 1, characterized in that the thermoplastic shaping is carried out within the temperature range of from 50 to 200°C at a pressure of from 5 to 400 bar.

3. Moulded articles obtainable according to claims 1 and 2.

## Revendications

1. Procédé de préparation de pièces moulées à une ou plusieurs couches à l'aide de petits morceaux ou de petites particules de produits de polyaddition de polyisocyanates sans fusion de ceux-ci, par façonnage thermoplastique et action de la pression, caractérisé en ce que
(i) on utilise comme produits de polyaddition de polyisocyanates des produits qui ont été préparés par réaction
a) de polyisocyanates (cyclo)aliphatiques ou aromatiques,
b) de composés ayant une masse moléculaire comprise entre 1 800 et 12 000 (masse moléculaire moyenne en nombre) qui présentent en moyenne statistique au moins 2,5 groupes réactifs vis-à-vis des groupes isocyanate,
éventuellement
c) de diamines ayant deux groupes amino primaires et/ou secondaires à liaison aromatique, de masse moléculaire comprise entre 108 et 400,
et éventuellement
d) de (cyclo)alcanepolyols et/ou de (cyclo)alcanepolyamines de masse moléculaire comprise entre 60 et 1799 et comportant éventuellement des groupes éther
et éventuellement en présence
e) des additifs et produits auxiliaires connus en soi dans la chimie des polyuréthanes,
avec le maintien d'un indice d'isocyanate de 60 à 140 en un procédé en une ou plusieurs étapes, sous réserve qu'au moins l'un des constituants c) et/ou d) présente une masse moléculaire comprise entre 60 et 400 et soit utilisé en une quantité telle que la masse totale des constituants c) et d) de ce domaine de masses moléculaires s'élève à au moins 5 % en masse par rapport à la masse du constituant b),
et
(ii) on effectue le façonnage thermoplastique en présence de produits auxiliaires de façonnage choisis dans le groupe constitué par des solvants qui font gonfler la surface des produits de polyaddition de polyisocyanates, des composés réactifs avec les produits de polyaddition de polyisocyanates au sens d'une réaction d'addition ou de condensation, des agents formateurs de radicaux et des matières façonnables de façon thermoplastique dans les conditions du procédé, différentes des produits de polyaddition de polyisocyanates.

2. Procédé selon la revendication 1, caractérisé en ce que l'on effectue le façonnage thermoplastique dans l'intervalle de températures de 50 à 200°C sous une pression de 5 à 400 bars.

3. Pièces moulées pouvant être obtenues selon la revendication 1 et 2.
